# EUROPÄISCHE PATENTSCHRIFT

(11) **EP 3 252 305 B1**
(45) Veröffentlichungstag und Bekanntmachung des Hinweises auf die Patenterteilung: **23.10.2019**
(21) Anmeldenummer: 17174028.5
(22) Anmeldetag: 01.06.2017
(51) Int. Cl.: F03D 13/10

(54) **VORRICHTUNG ZUM ERRICHTEN EINER WINDENERGIEANLAGE SOWIE VERWENDUNG DER VORRICHTUNG**
DEVICE FOR CONSTRUCTING A WIND TURBINE AND USE OF THE DEVICE
DISPOSITIF POUR L'INSTALLATION D'UNE ÉOLIENNE ET UTILISATION DUDIT DISPOSITIF

(30) Priorität: 01.06.2016 DE 102016006571
(43) Veröffentlichungstag der Anmeldung: 06.12.2017
(73) Patentinhaber: Senvion GmbH, 22297 Hamburg (DE)
(72) Erfinder: Lütjen, Jan, 25585 Lütjenwestedt (DE)
(74) Vertreter: Glawe, Delfs, Moll

(56) Entgegenhaltungen:
- EP-A1- 1 499 778
- EP-A1- 2 256 079
- DE-U1- 29 510 415
- KR-A- 20140 004 282
- KR-B1- 101 614 497
- US-A1- 2012 131 876

## Beschreibung

Die Erfindung betrifft eine Vorrichtung zum Errichten einer Windenergieanlage sowie deren Verwendungen.

In einer aus dem Stand der Technik bekannten, weit verbreiteten Bauform umfasst eine Windenergieanlage ein auf einem Fundament aus mehreren Turmsektionen aufgebauten Turm, an dessen oberen Ende in Azimutrichtung drehbar eine Gondel angeordnet ist. An der Gondel ist ein vom Wind antreibbarer Rotor mit einer im Wesentlichen horizontalen Rotationsachse angeordnet, der einen in der Gondel angeordneten Generator antreibt. Die so erzeugte elektrische Leistung kann, ggf. unter Zwischenschaltung von Umrichtern und/oder Transformatoren, in ein Versorgungsnetz eingespeist werden.

Bei der Errichtung entsprechender Windenergieanlagen wird gemäß dem Stand der Technik nach Erstellung des Fundaments zunächst der Turm errichtet, indem nach und nach die einzelnen Turmsektionen auf das Fundament bzw. bereits montierte Turmsektionen gehoben und dort befestigt werden. Ist der Turm fertiggestellt, wird entweder die Gondel komplett oder ein erster Teil der Gondel auf den Turm gehoben und an dessen Spitze zur späteren Azimutausrichtbarkeit drehbar befestigt. Anschließend wird der Triebstrang in den bereits montierten Teil der Gondel gehoben und dort ausgerichtet und befestigt. Erst dann wird die Gondel mit einem Dach verschlossen.

Ist die Gondel vollständig auf dem Turm der Windenergieanlage montiert, erfolgt die Montage des Rotors. Dabei sind zwei grundsätzlich unterschiedliche Montageverfahren bekannt. Bei dem einen Montageverfahren wird zunächst die Rotornabe drehbar an der Gondel befestigt, bevor anschließend die Rotorblätter einzeln an der bereits in Position befindlichen Rotornabe befestigt werden. Bei dem anderen Montageverfahren wird der Rotor am Boden vormontiert, d.h. die Rotorblätter sind bereits an der Rotornabe befestigt, bevor der Rotor als Ganzes auf die Höhe der Gondel angehoben und dort befestigt wird.

Nachteilig an diesem Stand der Technik ist, dass praktisch für den gesamten Zeitraum der Montage einer Windenergieanlage ein Hauptkran benötigt wird, dessen Hakenhöhe es ermöglicht, auch die an der Turmspitze zu montierenden Komponenten anzuheben. Aufgrund der Größe des erforderlichen Krans kann dieser auch zu Zeiten während der Montage, in denen er nicht zwingend gebraucht wird, wie bspw. des Tests oder der Inbetriebnahme einzelner Komponenten in der Gondel bevor der Rotor montiert wird, nicht anderweitig verwendet werden. Gleiches gilt auch, falls die einzelnen Komponenten erst zeitnah zu deren jeweiliger Montage am Aufstellort angeliefert werden sollen, es aber zu Verzögerungen bei der Anlieferung kommt.

Im Stand der Technik finden sich weiterhin Vorrichtungen zur Errichtung von Windenergieanlagen, mit denen Windenergieanlage vollständig oder in Teilen vormoniert werden können. Die in Dokumenten WO 03/093584 A1, US 2012/0131876 A1, KR 10-2014-0004282 und EP 2 256 079 A1 gezeigten Vorrichtungen sind dabei vornehmlich für den Offshore-Bereich und somit für die Anordnung auf Schiffen oder anderen Schwimmkörpern konzipiert; entsprechende Vorrichtung für den Onshore-Bereich sind nicht gezeigt.

Der Erfindung liegt die Aufgabe zugrunde, eine gegenüber dem Stand der Technik verbesserte Vorrichtung zum Errichten einer Windenergieanlage, sowie eine Verwendung dieser Vorrichtung zu schaffen.

Gelöst wird diese Aufgabe durch eine Vorrichtung gemäß dem Hauptanspruch sowie eine Verwendung gemäß Anspruch 5. Vorteilhafte Weiterbildungen sind Gegenstand der abhängigen Ansprüche.

Demnach betrifft die Erfindung eine Vorrichtung zur Vormontage der Gondel einer Windenergieanlage auf einem obersten Turmsegment, wobei eine Aufnahme zur vertikalen Befestigung eines Turmsegments der Windenergieanlage an einem Grundrahmen angeordnet ist und wobei eine am Grundrahmen angeordnete Aufnahme für die Rotornabe für die horizontale Montage des Windenergieanlagenrotors vorgesehen ist, die derart gegenüber der Aufnahme für das Turmsegment angeordnet ist, dass die Montage des Windenergieanlagenrotors auch bei einem auf der Aufnahme für das Turmsegment angeordneten Turmsegment möglich ist, wobei das so angeordnete Turmsegment als Gegengewicht während der Montage des Windenergieanlagenrotors wirkt, wobei die Montagevorrichtung derart klapp- und/oder teleskopierbar ist, dass sie im zusammengelegten Zustand Außenabmaße von maximal 2,5 m x 2,75 m x 10 m aufweist.

Die Erfindung betrifft weiterhin die Verwendung einer erfindungsgemäßen Vorrichtung, wobei ein oberstes Turmsegment in einer vertikalen Position in der Aufnahme angeordnet wird und wobei die Gondel an dem obersten Turmsegment vormontiert wird, bevor das oberste Turmsegment auf den bis auf das oberste Turmsegment montierten Turm gehoben und dort befestigt wird.

Indem beim Errichten einer Windenergieanlage bei erfindungsgemäßer Verwendung der Vorrichtung die Gondel bodennah bereits auf dem obersten Turmsegment montiert und anschließend beide Komponenten gemeinsam auf dem aus den übrigen Turmsegmenten bereits zu weiten Teilen aufgebauten Turm gehoben und dort befestigt werden, können bei der Vormontage der Gondel auf dem obersten Turmsegment bereits diverse Installations- und Überprüfungsarbeiten in Bodennähe ausgeführt werden, die ansonsten in großer Höhe durchgeführt werden müssten. Insbesondere fehlende Teile oder Defekte an der Gondel können zu einem Zeitpunkt erkannt werden, in dem sich die Gondel noch in Bodennähe befindet, sodass der nachträgliche Einbau fehlender Teile oder das Beheben von Defekten häufig einfacher möglich ist. Auch kann die Vormontage der Gondel derart frühzeitig vor dem Aufsetzen der Gondel zusammen mit dem obersten Turmsegment begonnen werden, dass ein Zeitpuffer für evtl. Verzögerungen bei der Vormontage der Gondel zur Verfügung steht und der Zeitplan für die eigentlich Errichtung der Windenergieanlage mit dem Aufsetzen der Gondel als einem der letzten Schritte nicht gefährdet wird. Schlussendlich ist eine Vormontage in Bodennähe weniger wetterabhängig als eine Montage der Gondel in großer Höhe.

Auch kann die Vormontage unabhängig von der Errichtung des Turms aus den übrigen Turmsegmenten erfolgen. Für die eigentliche Vormontage ist dabei insbesondere kein Großkran erforderlich. Vielmehr kann die Vormontage der Gondel auf dem obersten Turmsegment mit einem kleineren Kran, insbesondere einem Mobilkran, durchgeführt werden; ein Großkran ist erst erforderlich, um die Kombination aus oberstem Turmsegment und Gondel auf den ansonsten bereits errichteten Turm zu heben.

Wenn das oberste Turmsegment zusammen mit der darauf vormontierten Gondel auf dem bereits errichteten Teil des Turms gehoben wird, ist das oberste Turmsegment im Wesentlichen nur zu befestigen und die diversen Leitungen und/oder Schienensysteme am Übergang zwischen obersten Turmsegment und darunterliegendem Turmsegment zu verbinden. Ein weiterer (Innen-)Ausbau der Gondel und des oberen Turmsegmentes ist in der Regel nicht mehr erforderlich. Vielmehr kann praktisch unmittelbar der Rotor an der Gondel befestigt werden.

Erfindungsgemäß befindet sich das oberste Turmsegment für die Vormontage der Gondel in einer vertikalen Position. Das oberste Turmsegment befindet sich für die Vormontage der Gondel also in einer Ausrichtung, in der es sich auch im vollständig errichteten Zustand der Windenergieanlage befindet. Folglich wird auch die Gondel in einer Lage vormontiert, in der sie sich auch im Endzustand der Windenergieanlage befindet.

Vorzugsweise umfasst die Vormontage der Gondel auf dem obersten Turmsegment die Montage des Triebstrangs in der Gondel, die Montage und Ausrichtung der Generatorwelle, die Montage von Absperrgittern, die Montage von Triebstrangsensoren, die Montage von Leistungskabeln in der Gondel, die Montage des Kabelloops im Gondelbereichs, die Montage des Azimutverstellantriebs und/oder die Montage der Gondelbeleuchtung. Sämtlich vorgenannten Montagen lassen sich ohne weiteres bereits während der Vormontage der Gondel auf dem obersten Turmsegment durchführen.

Es ist weiter bevorzugt, wenn die Vormontage der Gondel auf dem obersten Turmsegment die Inbetriebnahme und/oder das Testen der Gondelsteuerung, der Sensorik und/oder der Azimutverstellung umfasst. Die Gondel kann mit der für die einzelnen Tests erforderlichen elektrischen Leistung von extern versorgt werden. Sofern die Gondel über ein Notstromaggregat verfügt, welches bereits montiert ist, kann die erforderliche elektrische Leistung aber auch von diesem bereitgestellt werden. Indem diverse Funktionen der Gondel bereits in Bodennähe getestet werden können, lassen sich evtl. festgestellte Fehler und Defekte vergleichsweise einfach beheben, insbesondere im Vergleich zu einer Fehlerdetektion erst nachdem die Gondel auf einen vollständig errichteten Turm einer Windenergieanlage befestigt wurde.

Das oberste Turmsegment weist vorzugsweise eine Höhe von wenigstens 10 m, weiter vorzugsweise von wenigstens 15 m auf. Durch eine entsprechende Höhe wird die Vormontage auch von an der Gondel angebundenen Komponenten, die in den Turm hineinragen, wie bspw. dem Kabelloop, ermöglicht.

Die Befestigung des obersten Turmsegments auf dem teilweise montierten Turm umfasst vorzugsweise die Montage von Turmschrauben, Leiterverbindern und Stromschienenverbindern. Der übrige (Innen-)Ausbau des obersten Turmsegments und/oder der Gondel erfolgt, wie bereits erwähnt, vorzugsweise vor der Befestigung des obersten Turmsegments auf dem teilweise montierten Turm.

Nach der Befestigung des obersten Turmsegments auf dem teilweise montierten Turm wird bevorzugt der Rotor drehbar an der Gondel der Windenergieanlage befestigt. Da bei der erfindungsgemäßen Verwendung der Vorrichtung nach der Befestigung des obersten Turmsegments auf dem teilweise montierten Turm keine oder nur sehr wenige Montagearbeiten an der Gondel erforderlich sind, kann die Befestigung des Rotors an der Gondel unmittelbar anschließend oder in kurzem Zeitabstand erfolgen.

Die Vorteile der Erfindung ergeben sich insbesondere bei der Errichtung mehrerer, vorzugsweise aller Windenergieanlagen eines Windparks. Aufgrund der räumlichen Nähe der aufzustellenden Windenergieanlagen eines Windparks können die für die Errichtung des Turms und für die Vormontage der Gondel auf dem obersten Turmsegment benötigten Kräne - in der Regel wenigstens ein Großkran und ein kleinerer Kran - besonders effizient eingesetzt werden. Die Vorteile ergeben sich insbesondere wenn fünf oder mehr Windenergieanlagen, vorzugsweise acht oder mehr Windenergieanlagen eines Windparks zeitgleich errichtet werden sollen.

Die Montagevorrichtung weist erfindungsgemäß eine am Grundrahmen angeordnete Aufnahme für die Rotornabe für die horizontale Montage des Windenergieanlagenrotors auf, die derart gegenüber der Aufnahme für das Turmsegment angeordnet ist, dass die Montage des Windenergieanlagenrotors auch bei einem auf der Aufnahme für das Turmsegment angeordneten Turmsegment möglich ist, wobei das so angeordnete Turmsegment als Gegengewicht während der Montage des Windenergieanlagenrotors wirkt. Letzteres kann erreicht werden, indem die beiden Aufnahmen in horizontaler Richtung beabstandet voneinander angeordnet sind. Ein auf der Aufnahme für ein Turmsegment angeordnetes Turmsegment kann insbesondere zwischen den Rotorblättern eines auf der Aufnahme für den Windenergieanlagenrotor vollständig montierten Rotor hindurch ragen, womit unmittelbar ersichtlich ist, dass auch die Montage des Windenergieanlagenrotors bei Vorhandensein eines entsprechenden Turmsegments - auch bei evtl. bereits darauf montierter Gondel - möglich ist.

Bei der Montage des Windenergieanlagenrotors in horizontaler Position wird zunächst die Rotornabe mit vertikaler Ausrichtung der Rotornabenachse an einer dafür geeigneten Aufnahme befestigt, bevor daran die einzelnen Rotorblätter nacheinander befestigt werden. Da die Rotorblätter nacheinander montiert werden, wirken auf die Aufnahme für den Windenergieanlagenrotor während der Montage verschiedene, aus den Gewichtskräften der Rotorblätter resultierende Momente, insbesondere bevor alle Rotorblätter montiert sind. Zum Ausgleich dieser Momente ist es als eine Möglichkeit bekannt, Gegengewichte zu verwenden. Erfindungsgemäß ist hierfür die Aufnahme für das Turmsegment am Grundrahmen so angeordnet, dass ein darauf angeordnetes Turmsegment - ggf. mit daran bereits montierter Gondel - als Gegengewicht dient. Dies bietet den Vorteil, dass keine gesonderten Gegengewichte bereitgestellt werden müssen, womit sich insbesondere der Transportaufwand für Grundrahmen-Ballastgewichte bzw. die Hilfsmittel zur Errichtung einer Windenergieanlage insgesamt reduzieren lässt.

Es ist bevorzugt, wenn die Aufnahme für die Rotornabe für die horizontale Montage des Windenergieanlagenrotors eine Drehvorrichtung umfasst, mit der sich die an der Aufnahme befestigte Rotornabe um die Rotornabenachse drehen lässt. Eine entsprechende Drehvorrichtung ermöglicht es, den teilmontierten Windenergieanlagenrotor während der Montage so zu drehen, dass das durch ihn auf die Montagevorrichtung einwirkende Moment durch das Gewicht eines auf der Aufnahme für Turmsegmente angeordneten Turmsegments ausgeglichen werden kann.

Die Montagevorrichtung ist erfindungsgemäß derart klapp- und/oder teleskopierbar, dass sie im zusammengelegten Zustand Außenabmaße von maximal 2,5 m x 2,75 m x 10 m aufweist, vorzugweise dass die Außenabmaße so gewählt sind, dass sich die Montagevorrichtung in einem 40-Fuß-Standartcontainer, weiter vorzugsweise in einen 20-Fuß-Standartcontainer verladen lässt. Die Montagevorrichtung lässt sich so auf ein Transportvolumen zusammenlegen, welches einen problemlosen Transport ohne Übermaß, insbesondere über die Straße und/oder per Schiff, ermöglicht.

Es ist bevorzugt, wenn die Aufnahme für den Windenergieanlagenrotor der erfindungsgemäßen Montagevorrichtung wenigstens ein Turmelement eines Turmsystems eines Hochbaukrans umfasst, wobei das Turmsystems lösbar am Grundrahmen befestigt ist und die Aufnahme für den Windenergieanlagenrotor am von dem Grundrahmen entfernten Ende des Turmsystems angeordnet ist. Als Aufnahme kann bspw. eine geeignete Adaptervorrichtung vorgesehen sein, die sich auf der einen Seite mit dem Turmsystem verbinden lässt und auf der anderen Seite einen Rotorflansch zur Befestigung der Rotornabe aufweist.

"Turmsystem eines Hochbaukrans" bezeichnet das System zur Erstellung des Turms eines mobil einsetzbaren Turmdrehkrans, insbesondere eines oben-drehenden Turmdrehkrans. Entsprechende Turmsysteme werden von verschiedenen Herstellern angeboten und umfassen ein Grundsegment auf dem einzelne Turmsegmente angeordnet werden, um letztendlich den Turm des Krans mit einer gewünschten Höhe zu bilden. Die einzelnen Turmsegmente sind dabei so ausgestaltet und dimensioniert, dass sie sich ohne weiteres per Lastkraftwagen zu dem gewünschten Aufstellort des Turmkrans transportieren lassen und umfassen Schnittstellen zur Verbindung mit weiteren Segmenten. Da regelmäßig auf lokal verfügbare Turmsysteme zurückgegriffen werden kann, beschränkt sich der Transport der erfindungsgemäßen Montagevorrichtung von einem Aufstellort zum nächsten im Wesentlichen auf den Grundrahmen. Das Turmsystem kann lokal bereitgestellt werden, bspw. durch lokale Verleiher von Hochturmkränen mit geeigneten Turmsystemen. Es kann so vermieden werden, dass ein hohes Transportvolumen und/oder ein hohes Transportgewicht über teils lange Strecken transportiert werden muss.

Darüber hinaus ermöglicht die Verwendung eines Turmsystems bei der Aufnahme für den Windenergieanlagenrotor eine vom Boden beabstandete Montage des Rotors. Indem das Turmsystem umfassend wenigstens ein Turmsegment bereits zwingend eine gewisse Höhe aufweist, ist ein darauf montierter Rotor einer Windenergieanlage derart vom Boden beabstandet, dass wenigstens ein Durchgehen unter dem Rotor hindurch regelmäßig möglich ist. Durch das evtl. Vorsehen weiterer Turmsegmente beim Turmsystem kann der Abstand zwischen Boden und Rotor auch derart planvoll gewählt werden, dass eine beliebige gewünschte Durchgangshöhe, bspw. um Hindurchfahren mit Fahrzeugen oder sonstigen Geräten zu gewährleisten, erreicht wird. Auch kann erreicht werden, den Rotor oberhalb von sog. Bestandshindernissen, wie Bäumen, zu montieren, sodass diese nicht beseitigt werden müssen, z.B. durch Fällung. Zudem wird durch die Montagevorrichtung die Rotormontage bei Hanglage ermöglicht, indem der Rotor so weit erhöht wird, dass die zum Hang gerichteten Blätter horizontal positioniert werden können.

Das Turmelement und/oder die Anzahl der Turmelemente ist vorzugsweise so gewählt, dass die minimale Durchfahrtshöhe unter einem auf der Aufnahme montierten Windenergieanlagenrotors wenigstens 4,5 m, vorzugsweise wenigstens 8 m, weiter vorzugsweise wenigstens 9,5 m beträgt. Dazu können insbesondere mehrere aufeinander angeordnete Turmelemente vorgesehen sein, um die letztendlich gewünschte Durchfahrtshöhe zu erreichen.

Gleichzeitig ist bevorzugt, wenn die maximale Höhe eines auf der Aufnahme montierten Windenergieanlagenrotors über dem Grund 40 m, vorzugsweise 35 m, weiter vorzugsweise 25 m beträgt. Durch eine entsprechende maximale Höhe kann sichergestellt werden, dass der Windenergieanlagenrotor mit vergleichsweise kleinen bzw. niedrigen Kränen montierbar ist und ein Großkran lediglich für die Montage des vormontierten Rotors an der Gondel der Windenergieanlage gebraucht wird.

Die Erfindung wird nun anhand vorteilhafter Ausführungsformen unter Bezugnahme auf die beigefügten Zeichnungen beispielhaft beschrieben. Es zeigen:
- Figur 1:: eine schematische Darstellung eines Ausführungsbeispiels einer möglichen Montagevorrichtung mit darauf angeordnetem Turmsegment mit vormontierter Gondel;
- Figur 2:: die Montagevorrichtung aus Figur 1 am Aufstellort einer Windenergieanlage;
- Figur 3a,b:: schematische Darstellung zweier Ausführungsvarianten eines Ausführungsbeispiels einer erfindungsgemäßen Montagevorrichtung; und
- Figur 4:: die Montagevorrichtung aus Figur 3 am Aufstellort einer Windenergieanlage.

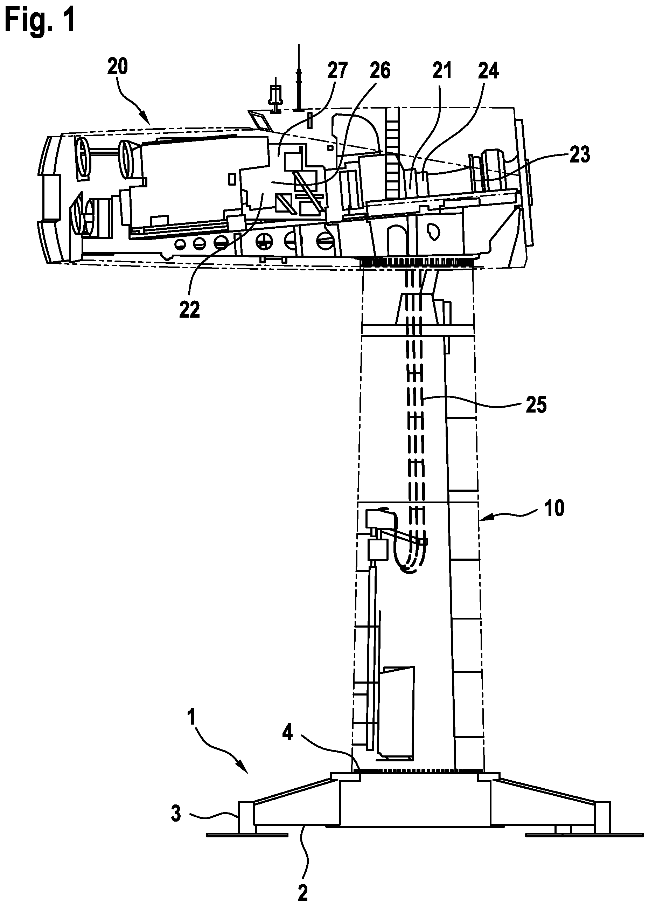

In Figur 1 ist ein Ausführungsbeispiel einer Montagevorrichtung 1 mit darauf angeordneten Turmsegment 10 mit vormontierter Gondel 20 einer Windenergieanlage schematisch dargestellt, wobei Turmsegment 10 und Gondel 20 teiltransparent dargestellt sind.

Die Montagevorrichtung 1 umfasst einen Grundrahmen 2 mit höheneinstellbaren Füßen 3 zum Ausgleich von Bodenunebenheiten. Der Grundrahmen 2 weist an seiner Oberseite eine Aufnahme 4 auf, an der das oberste Turmsegment 10 des Turms einer Windenergieanlage in vertikaler Anordnung befestigt ist.

Auf dem obersten Turmsegment 10 ist die Gondel 20 drehbar befestigt, wobei zur Montage der Gondel 20 zunächst der mit dem Turmsegment 10 unmittelbar drehbar verbundene Teil der Gondel 20 montiert wurde, bevor anschließend der Triebstrang 21 in den bereits montierten Teil der Gondel 20 eingesetzt wurde. In diesem Zusammenhang wurde auch die Generatorwelle 22 montiert und ausgerichtet. Weiterhin wurden in der Gondel 20, nachdem diese auf dem Turmsegment 10 montiert wurde, montiert: die Absperrgitter 23 Richtung Nabenniedergang, diverse Triebstrangsensoren 24, die Leistungskabel 25 im Turmbereich, die als sog. Kabelloop ausgestaltet sind, die Gondelbeleuchtung 26 und die Versorgungsleitungen 27 zur Versorgung der Komponenten der Gondel 20 über den Gondelgenerator. Abschließend wurde das Dach der Gondel 20 aufgesetzt.

Da die Montage der Gondel 20 auf dem obersten Turmsegment 10 bodennah erfolgt - das oberste Turmsegment 10 ist auf dem Grundrahmen 2 der Montagevorrichtung 1 angeordnet, welche auf dem Boden steht - ist hierfür nur ein vergleichsweise kleiner Kran erforderlich. Anders als der für die letztendliche Errichtung der Windenergieanlage erforderliche Großkran kann die Vormontage der Gondel 20 auf dem obersten Turmsegment 10 mit einem deutlich kleineren Kran, wie insbesondere einem Mobilkran durchgeführt werden.

Neben der Montage der Gondel 20 auf dem obersten Turmsegment 10 kann weiterhin eine erste Inbetriebnahme diverser Komponenten der Gondel 20 vorgenommen und die Steuerung, die Sensorik und die Azimutverstellung der Gondel 20 derart bodennah getestet werden, dass bei einem Fehler die Reparatur ebenfalls bodennah und damit insbesondere kostengünstiger durchgeführt werden kann, als wenn sie in größer Höhe bei vollständig montiertem Turm der Windenergieanlage mit darauf angeordneter Gondel 20 durchgeführt werden müsste.

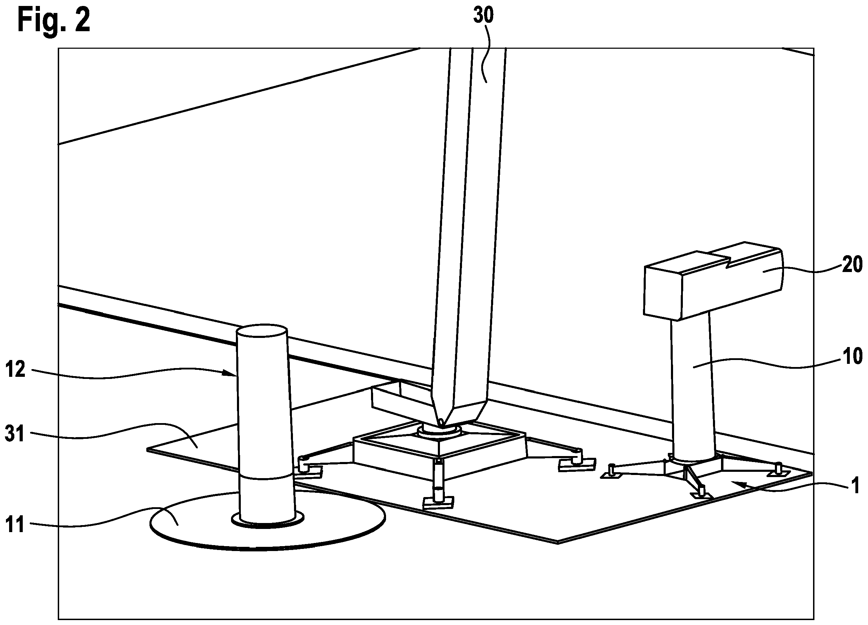

In Figur 2 ist die Montagevorrichtung 1, wie sie in Figur 1 dargestellt ist, d.h. insbesondere mit darauf montiertem obersten Turmsegment 10 und Gondel 20, am Aufstellort einer Windenergieanlage gezeigt.

Neben dem bereits auf einem Fundament 11 montierten untersten Turmsegment 12 der Windenergieanlage befindet sich die Kranaufstellfläche 31, auf dem ein Großkran 30 aufgestellt ist. Mithilfe des Großkrans 30 lassen sich die weiteren Turmsegmente (nicht dargestellt) des Turms der Windenergieanlage nacheinander auf die bereits montierten Turmsegmente, beginnend mit dem untersten Turmsegment 12 montieren. Zum Abschluss wird das oberste Turmsegment 10 zusammen mit der darauf montierten Gondel 20 auf den Turm gehoben und dort befestigt. Dazu ist die Montagevorrichtung 1 im Aktionsradius des Großkrans 30 angeordnet, sodass das darauf angeordnete oberste Turmsegment 10 mit vormontierter Gondel 20 einfach vom Großkran 30 angehoben werden kann.

Ist das oberste Turmsegment 10 auf den bereits montierten Turm gehoben, muss das Segment lediglich mit dem darunterliegenden Turmsegment verbunden werden, wobei zusätzlich lediglich die diversen Leitungsverbindungen und/oder Verbindungen von Schienensysteme (wie bspw. eine Aufstiegsleiter, Stromschienen oder Aufzugsführungen), zwischen den beiden Turmsegmenten hergestellt werden müssen. Ein weitergehender (Innen-)Ausbau des Turms und insbesondere der Gondel 20 ist nicht erforderlich.

Erneut ist darauf hinzuweisen, dass die Montage des obersten Turmsegments 10 auf der Montagevorrichtung 1 sowie die Montage der Gondel 20 darauf mit einem deutlich kleineren Kran, wie bspw. einem Mobilkran (nicht dargestellt), durchgeführt werden kann und der Großkran 30 erst zur letztendlichen Errichtung der Windenergieanlage erforderlich ist. Ist das oberste Turmsegment 10 zusammen mit der Gondel 20 auf dem Turm der Windenergieanlage montiert, wird abschließend noch der Rotor der Windenergieanlage montiert.

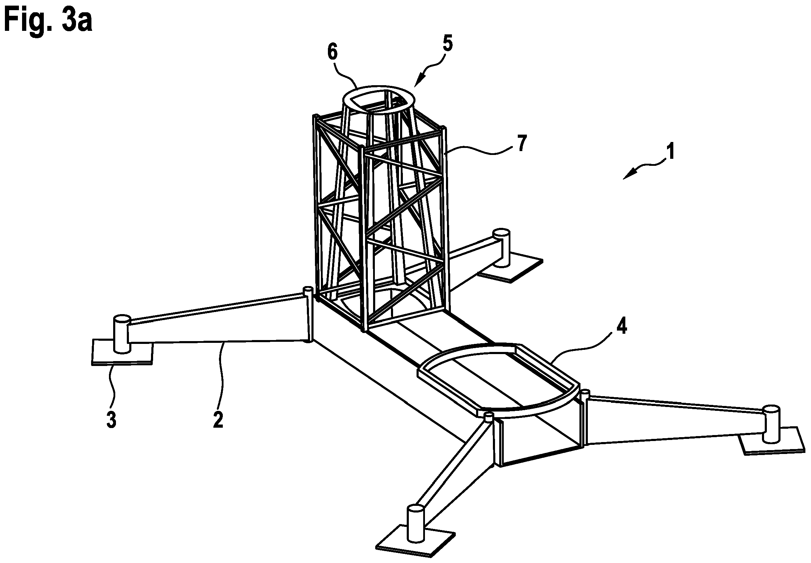

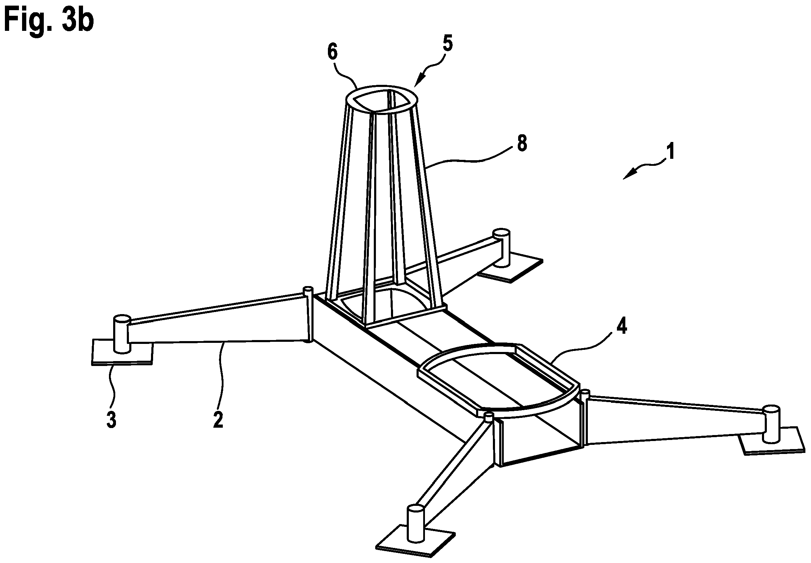

In Figur 3a, b sind zwei Ausführungsvarianten eines Ausführungsbeispiels einer erfindungsgemäßen Montagevorrichtung 1 gezeigt.

Die Montagevorrichtung 1 umfasst dabei erneut einen Grundrahmen 2 mit höheneinstellbaren Füßen 3 zum Ausgleich von Bodenunebenheiten. Der Grundrahmen 2 weist an seiner Oberseite weiterhin eine Aufnahme 4 auf, an der das oberste Turmsegment 10 des Turms einer Windenergieanlage in vertikaler Anordnung befestigt werden kann.

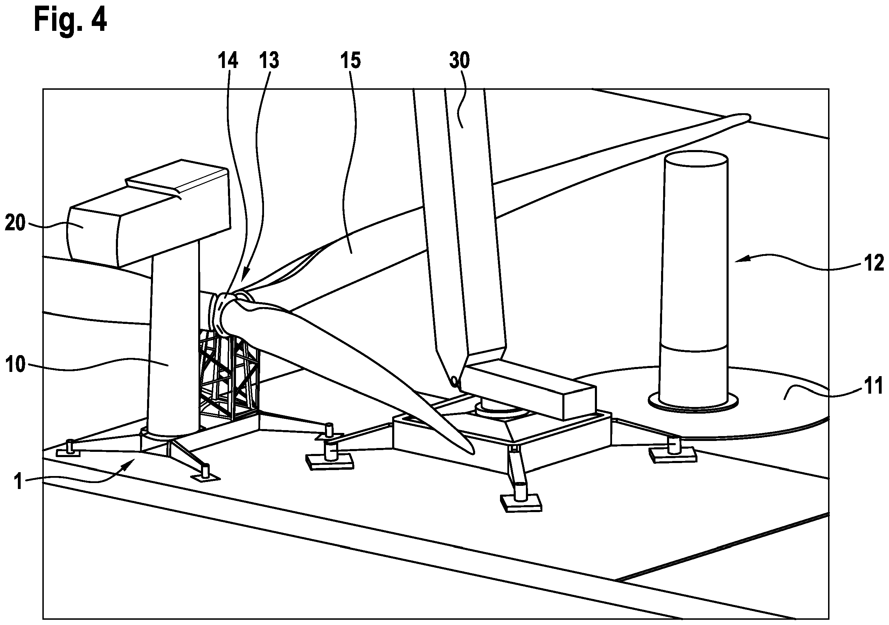

Darüber hinaus weist die Montagevorrichtung 1 noch eine Aufnahme 5 für die horizontale Montage eines Windenergieanlagenrotors 13 auf. Die Aufnahme 5 ist dabei zur Befestigung der Rotornabe 14 daran derart angeordnet, dass die Montage des Windenergieanlagenrotors 13 parallel zur Vormontage der Gondel 20 auf dem obersten Turmsegment 10, welche auf der entsprechenden Aufnahme 4 erfolgt, durchgeführt werden kann. Wie in Figur 4 gezeigt, kann dabei das oberste Turmsegment 10 durch die Rotorblätter 15 des Rotors 13 hindurch ragen. Gleichzeitig dient das auf dem Grundrahmen montierte Turmsegment 10, zusammen mit der ggf. darauf bereits montierten Gondel 20, als Gegengewicht für einen teilmontierten Windenergieanlagenrotor 13.

Die Aufnahme 5 für die Rotornabe 14 eines Windenergieanlagenrotors 13 umfasst eine Drehvorrichtung 6, mit der die daran befestigte Rotornabe 14 um ihre Rotornabenachse gedreht werden kann.

Die Aufnahme 5 für die Rotornabe 14 ist gegenüber der Aufnahme 4 für das oberste Turmsegment 10 erhöht angeordnet, wobei zur Herstellung des Abstands zwischen dem Grundrahmen 2 und der eigentlichen Aufnahme 5 für die Rotornabe 14 auf ein Turmelement 7 eines Turmsystems eines Hochbaukrans zurückgegriffen werden kann (vgl. Ausführungsvariante gemäß Figur 3a). Durch die Wahl der Anzahl der verwendeten Turmelemente 7 kann der Abstand zwischen auf der Aufnahme 5 montierten Rotors 13 und dem Boden gewählt werden. Alternativ dazu ist es möglich, dass die Drehvorrichtung 6 auf einem speziellen Stützrahmen 8 angeordnet ist, der unmittelbar mit dem Grundrahmen verbunden ist. Eine entsprechende Ausführungsvariante ist in Figur 3b dargestellt.

Das Turmelement 7 ist lösbar am Grundrahmen 2 befestigt. Ist das Turmelement 7 entfernt, lässt sich der Grundrahmen 2 durch Klappen auf ein Maß zusammenlegen, mit dem es in einem 20-Fuß-Standartcontainer transportiert werden kann (nicht dargestellt) .

In Figur 4 ist die Situation an dem Aufstellort einer Windenergieanlage mit der Montagevorrichtung 1 gemäß Figur 3a dargestellt. Die Montagevorrichtung 1 ist derart auf der Kranaufstellfläche 31 angeordnet, dass sowohl das darauf vormontierte oberste Turmsegment 10 mit Gondel 20 als auch der Rotor 13 von dem Großkran 30 ohne weiteres angehoben werden kann.

Auch wenn in Figur 4 bereits ein Großkran 30 auf dem Kranaufstellplatz 31 vorgesehen ist, ist zu beachten, dass sowohl die Vormontage des Turmsegments 10 und der Gondel 20 als auch die Montage des Rotors 13 mit kleinere Kränen, insbesondere mit Mobilkränen, durchgeführt werden kann.

Im dargestellten Ausführungsbeispiel beträgt der Durchfahrtshöhe unter dem auf der Aufnahme 5 der Montagevorrichtung 1 montierten Rotor 13 wenigstens 8 m, wobei die maximale Höhe des Rotors 13 deutlich unter 25 m liegt. Durch die entsprechenden Maße kann einerseits der Baustellenverkehr unterhalb des Rotors problemlos erfolgen, während gleichzeitig noch vergleichsweise kleine Kräne für die Montage des Rotors 13 genutzt werden können.

## Patentansprüche

1. Vorrichtung (1) zur Vormontage der Gondel (20) einer Windenergieanlage auf einem obersten Turmsegment (10), wobei eine Aufnahme (4) zur vertikalen Befestigung eines Turmsegments (10) der Windenergieanlage an einem Grundrahmen (2) angeordnet ist, wobei eine am Grundrahmen (2) angeordnete Aufnahme (5) für die Rotornabe (14) für die horizontale Montage des Windenergieanlagenrotors (13) vorgesehen ist, die derart gegenüber der Aufnahme (4) für das Turmsegment (10) angeordnet ist, dass die Montage des Windenergieanlagenrotors (13) auch bei einem auf der Aufnahme (4) für das Turmsegment (10) angeordneten Turmsegment (10) möglich ist und das so angeordnete Turmsegment (10) als Gegengewicht während der Montage des Windenergieanlagenrotors (13) wirkt, **dadurch gekennzeichnet, dass** die Vorrichtung (1) derart klapp- und/oder teleskopierbar ist, dass sie im zusammengelegten Zustand Außenabmaße von maximal 2,5 m x 2,75 m x 10 m aufweist.

2. Vorrichtung nach Anspruch 1, **dadurch gekennzeichnet, dass** die Außenabmaße der Vorrichtung (1) im zusammengelegten Zustand so gewählt sind, dass sich die Vorrichtung (1) in einen 40-Fuß-Standartcontainer, vorzugsweise in einen 20-Fuß-Standartcontainer verladen lässt.

3. Vorrichtung nach Anspruch 1 oder 2,
**dadurch gekennzeichnet, dass**
die Aufnahme (5) für die Rotornabe (14) für die horizontale Montage des Windenergieanlagenrotors (13) eine Drehvorrichtung (6) umfasst, mit der sich die an der Aufnahme (5) befestigte Rotornabe (14) um die Rotornabenachse drehen lässt.

4. Vorrichtung nach einem der vorhergehenden Ansprüche,
**dadurch gekennzeichnet, dass**
die Aufnahme (5) für den Windenergieanlagenrotor (13) wenigstens ein Turmelement (7) eines Turmsystems eines Hochbaukrans umfasst, wobei das Turmelement (7) lösbar am Grundrahmen (2) befestigt ist und die Aufnahme (5) für den Windenergieanlagenrotor (13) am von dem Grundrahmen (2) entfernten Ende des wenigstens einen Turmelements (7) angeordnet ist.

5. Verwendung einer Vorrichtung (1) nach einem der vorhergehenden Ansprüche, wobei
ein oberstes Turmsegment (10) in einer vertikalen Position in der Aufnahme (4) angeordnet wird, wobei die Gondel (20) an dem obersten Turmsegment (10) vormontiert wird, bevor das oberste Turmsegment (10) auf den bis auf das oberste Turmsegment montierten Turm gehoben und dort befestigt wird.

6. Verwendung nach Anspruch 5,
**dadurch gekennzeichnet, dass**
die Vormontage der Gondel (20) auf dem obersten Turmsegment (10) die Montage des Triebstrangs in der Gondel, die Montage und Ausrichtung der Generatorwelle, die Montage von Absperrgittern, die Montage von Triebstrangsensoren, die Montage von Leistungskabeln in der Gondel, die Montage des Kabelloops im Gondelbereich, die Montage des Azimutverstellantriebs und/oder die Montage der Gondelbeleuchtung umfasst.

7. Verwendung nach Anspruch 5 oder 6,
**dadurch gekennzeichnet, dass**
die Vormontage der Gondel (20) auf dem obersten Turmsegment (10) die Inbetriebnahme und/oder das Testen der Gondelsteuerung, der Sensorik und/oder der Azimutverstellung umfasst.

8. Verwendung nach einem der Ansprüche 5 bis 7,
**dadurch gekennzeichnet, dass**
die Befestigung des obersten Turmsegments (10) auf dem teilweise montierten Turm die Montage von Turmschrauben, Leiterverbindern und Stromschienenverbindern umfasst.

9. Verwendung nach einem der Ansprüche 5 bis 8,
**dadurch gekennzeichnet, dass**
nach der Befestigung des obersten Turmsegments (10) auf dem teilweise montierten Turm der Rotor (13) drehbar an der Gondel (20) der Windenergieanlage befestigt wird.

10. Verwendung nach einem der Ansprüche 5 bis 9,
**dadurch gekennzeichnet, dass**
das oberste Turmsegment (10) eine Höhe von wenigstens 10 m, vorzugsweise von wenigstens 15 m aufweist.

## Claims

1. Device (1) for premounting the nacelle (20) of a wind turbine on an uppermost tower segment (10), wherein a receptacle (4) for vertically fastening a tower segment (10) of the wind turbine is arranged on a base frame (2), wherein a receptacle (5), which is arranged on the base frame (2), for the rotor hub (14) for the horizontal mounting of the wind turbine rotor (13) is provided which is arranged with respect to the receptacle (4) for the tower segment (10) in such a way that the mounting of the wind turbine rotor (13) is possible even when there is a tower segment (10) arranged on the receptacle (4) for the tower segment (10), and the tower segment (10) thus arranged acts a counterweight during the mounting of the wind turbine rotor (13),
**characterized in that**
the device (1) is foldable and/or telescopable in such a way that, in the collapsed state, it has external dimensions of at most 2.5 m × 2.75 m × 10 m.

2. Device according to Claim 1, **characterized in that** the external dimensions of the device (1) in the collapsed state are chosen such that the device (1) can be loaded into a 40-foot standard container, preferably into a 20-foot standard container.

3. Device according to Claim 1 or 2,
**characterized in that**
the receptacle (5) for the rotor hub (14) for the horizontal mounting of the wind turbine rotor (13) comprises a rotary device (6) by means of which the rotor hub (14) fastened to the receptacle (5) can be rotated about the rotor hub axis.

4. Device according to one of the preceding claims,
**characterized in that**
the receptacle (5) for the wind turbine rotor (13) comprises at least one tower element (7) of a tower system of a tower crane, wherein the tower element (7) is releasably fastened to the base frame (2), and the receptacle (5) for the wind turbine rotor (13) is arranged at that end of the at least one tower element (7) which is remote from the base frame (2).

5. Use of a device (1) according to one of the preceding claims, wherein an uppermost tower segment (10) is arranged in a vertical position in the receptacle (4), wherein the nacelle (20) is premounted on the uppermost tower segment (10) before the uppermost tower segment (10) is lifted onto the tower mounted up to the uppermost tower segment and is fastened there.

6. Use according to Claim 5,
**characterized in that**
the premounting of the nacelle (20) on the uppermost tower segment (10) comprises the mounting of the drive train in the nacelle, the mounting and orientation of the generator shaft, the mounting of barrier gratings, the mounting of drive train sensors, the mounting of power cables in the nacelle, the mounting of the cable loop in the nacelle region, the mounting of the azimuth adjustment drive and/or the mounting of the nacelle lighting.

7. Use according to Claim 5 or 6,
**characterized in that**
the premounting of the nacelle (20) on the uppermost tower segment (10) comprises the putting into operation and/or the testing of the nacelle control, the sensor system and/or the azimuth adjustment.

8. Use according to one of Claims 5 to 7,
**characterized in that**
the fastening of the uppermost tower segment (10) on the partially mounted tower comprises the mounting of tower bolts, ladder connectors and busbar connectors.

9. Use according to one of Claims 5 to 8,
**characterized in that**
after fastening the uppermost tower segment (10) on the partially mounted tower, the rotor (13) is fastened rotatably on the nacelle (20) of the wind turbine.

10. Use according to one of Claims 5 to 9,
**characterized in that**
the uppermost tower segment (10) has a height of at least 10 m, preferably of at least 15 m.

## Revendications

1. Dispositif (1) pour le prémontage de la nacelle (20) d'une éolienne sur un segment de tour supérieur (10), un logement (4) pour la fixation verticale d'un segment de tour (10) de l'éolienne étant disposé au niveau d'un cadre de base (2),
un logement (5) disposé au niveau du cadre de base (2) pour le moyeu de rotor (14) étant prévu pour le montage horizontal du rotor de l'éolienne (13), lequel est disposé à l'opposé du logement (4) pour le segment de tour (10) de telle sorte que le montage du rotor de l'éolienne (13) soit également possible lorsqu'un segment de tour (10) est disposé sur le logement (4) pour le segment de tour (10) et le segment de tour (10) ainsi disposé agissant en tant que contrepoids pendant le montage du rotor de l'éolienne (13),
**caractérisé en ce que**
le dispositif (1) peut être rabattu et/ou télescopé de telle sorte qu'il présente, dans l'état replié, des dimensions extérieures maximales de 2,5 m x 2,75 m x 10 m.

2. Dispositif selon la revendication 1, **caractérisé en ce que** les dimensions extérieures du dispositif (1) dans l'état replié sont choisies de telle sorte que le dispositif (1) puisse être chargé dans un conteneur standard de 40 pieds, de préférence dans un conteneur standard de 20 pieds.

3. Dispositif selon la revendication 1 ou 2, **caractérisé en ce que** le logement (5) pour le moyeu de rotor (14) pour le montage horizontal du rotor de l'éolienne (13) comprend un dispositif rotatif (6) avec lequel le moyeu de rotor (14) fixé au niveau du logement (5) peut être tourné autour de l'axe du moyeu de rotor.

4. Dispositif selon l'une quelconque des revendications précédentes, **caractérisé en ce que** le logement (5) pour le rotor de l'éolienne (13) comprend au moins un élément de tour (7) d'un système de tour d'une grue de chantier, l'élément de tour (7) étant fixé de manière détachable au cadre de base (2) et le logement (5) pour le rotor de l'éolienne (13) étant disposé au niveau de l'extrémité de l'au moins un élément de tour (7) éloignée du cadre de base (2).

5. Utilisation d'un dispositif (1) selon l'une quelconque des revendications précédentes, un segment de tour supérieur (10) étant disposé dans une position verticale dans le logement (4), la nacelle (20) étant prémontée au niveau du segment de tour supérieur (10) avant que le segment de tour supérieur (10) ne soit soulevé sur la tour montée jusqu'au segment de tour supérieur et y soit fixé.

6. Utilisation selon la revendication 5, **caractérisée en ce que** le prémontage de la nacelle (20) sur le segment de tour supérieur (10) comprend le montage de la ligne d'entraînement dans la nacelle, le montage et l'orientation de l'arbre du générateur, le montage des barrières de protection, le montage des capteurs de ligne d'entraînement, le montage de câbles de puissance dans la nacelle, le montage des circuits de câbles dans la région de la nacelle, le montage de l'entraînement de réglage azimutal, et/ou le montage de l'éclairage de la nacelle.

7. Utilisation selon la revendication 5 ou 6, **caractérisée en ce que** le prémontage de la nacelle (20) sur le segment de tour supérieur (10) comprend la mise en service et/ou le test de la commande de la nacelle, du système de capteurs et/ou du réglage azimutal.

8. Utilisation selon l'une quelconque des revendications 5 à 7, **caractérisée en ce que** la fixation du segment de tour supérieur (10) sur la tour partiellement montée comprend le montage des vis de la tour, des connecteurs électriques et des connecteurs de rails conducteurs.

9. Utilisation selon l'une quelconque des revendications 5 à 8, **caractérisée en ce qu'**après la fixation du segment de tour supérieur (10) sur la tour partiellement montée, le rotor (13) est fixé de manière rotative sur la nacelle (20) de l'éolienne.

10. Utilisation selon l'une quelconque des revendications 5 à 9, **caractérisée en ce que** le segment de tour supérieur (10) présente une hauteur d'au moins 10 m, de préférence d'au moins 15 m.
